# EUROPEAN PATENT APPLICATION

(11) **EP 4 679 864 A1**
(43) Date of publication of application: **14.01.2026**
(21) Application number: 24802504.1
(22) Date of filing: 05.01.2024
(51) Int. Cl.: H04W 4/02, H04L 67/52, H04W 4/021, H04W 48/08, H04W 48/16

(54) **COMMUNICATION METHODS, COMMUNICATION APPARATUS AND COMMUNICATION SYSTEM**

(30) Priority: 10.05.2023 CN 202310523597
(71) Applicant: Huawei Technologies Co., Ltd., Shenzhen, Guangdong 518129 (CN)
(72) Inventor: QU, Qin, Shenzhen, Guangdong 518129 (CN); ZHANG, Lei, Shenzhen, Guangdong 518129 (CN)
(74) Representative: Maiwald GmbH
(86) International application number: PCT/CN2024/070837
(87) International publication number: WO 2024/230215

(57) **Abstract**

This application provides a communication method, a communication apparatus, and a communication system. The method includes: A mobility management network element obtains request information and position information that are of a terminal device from an access network device, where the request information is used by the terminal device to request to perform a service, and the position information indicates a position of the terminal device when the terminal device sends the request information. When determining that the position is in an area in which performing of the service is forbidden, the mobility management network element may reject the request information, and send response information indicating that the request information is rejected to the terminal device through the access network device, where the response information includes a parameter used by the terminal device to determine sending time of another piece of request information that is also used to request to perform the service. According to the foregoing technical solution, in this application, the terminal device does not continuously send new request information to the mobility management network element after request information for requesting to perform a specific service is rejected, so that power consumption of the terminal device can be reduced.

## Description

This application claims priority to Chinese Patent Application No. 202310523597.7, filed with the China National Intellectual Property Administration on May 10, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and more specifically, to a communication method, a communication apparatus, and a communication system.

### BACKGROUND

In a conventional communication scenario, a terminal device may initiate a registration procedure or a protocol data unit (protocol data unit, PDU) session establishment procedure based on a tracking area (tracking area, TA) broadcast by an access network device or a TA list delivered by an access and mobility management function (access and mobility management function, AMF) network element.

However, in a satellite communication scenario, the access network device no longer broadcasts the TA to the terminal device, and the AMF no longer delivers the TA list to the terminal device. When the AMF rejects a registration procedure request or a PDU session establishment procedure request of the terminal device based on an area restriction condition, because no TA information is obtained, the terminal device continuously sends registration request information or PDU session establishment request information to the AMF. Consequently, power consumption of the terminal device is high. Therefore, currently, how to reduce power consumption of the terminal device is a technical problem that urgently needs to be resolved.

### SUMMARY

This application provides a communication method, a communication apparatus, and a communication system, so that power consumption of a terminal device can be reduced.

According to a first aspect, a communication method is provided, and includes: receiving first request information and first position information, where the first request information is used by a terminal device to request to perform a first service, and the first position information indicates a first position of the terminal device; determining that the first position is in a first area, where the first area is an area in which performing of the first service is forbidden; and sending first response information, where the first response information indicates that the first request information is rejected, the first response information includes a first parameter, the first parameter is for determining sending time of second request information, and the second request information is used by the terminal device to request to perform the first service.

Specifically, an execution body of the solution according to the first aspect may be a mobility management network element, or may be a device, a module, or the like configured to perform a function of the mobility management network element. This is not limited. Specifically, the mobility management network element obtains the first request information and the first response information of the terminal device through an access network device. When the mobility management network element determines to reject the first request information, the mobility management network element includes the first parameter in the first response information, and the terminal device can determine, based on the first parameter, the time for sending the second request information to the mobility management network element. In this way, the terminal device does not continuously send the request information to the mobility management network element, so that power consumption of the terminal device can be reduced, and load on a network side can be further reduced.

In a possible implementation, the first parameter includes a first radius, and a distance between a second position corresponding to the second request information and the first position is greater than or equal to the first radius.

Specifically, the mobility management network element may indicate, to the terminal device, a distance by which movement needs to be performed, namely, the first radius. The terminal device moves from a first position at which the first request information is sent, and sends the second request information to the mobility management network element after a moving distance is greater than or equal to the first radius. In this way, the terminal device does not continuously send the request information after the first request information is rejected, so that power consumption of the terminal device can be reduced.

In a possible implementation, the first parameter includes first duration, and interval duration between the sending time of the second request information and sending time of the first request information is greater than or equal to the first duration.

Specifically, the mobility management network element may indicate time information by which sending of the request information to the terminal device is delayed, namely, the first duration. After the first request information is sent and an interval to the sending is greater than or equal to time corresponding to the first duration, the terminal device may send the second request information to the mobility management network element. In this way, the terminal device does not continuously send the request information after the first request information is rejected, so that power consumption of the terminal device can be reduced.

According to a second aspect, a communication method is provided, and includes: sending first request information, where the first request information is for requesting to perform a first service; receiving first response information, where the first response information indicates that the first request information is rejected, the first response information includes a first parameter, the first parameter is for determining sending time of second request information, and the second request information is for requesting to perform the first service. The first request information corresponds to a first position, the first position is in a first area, and the first area is an area in which performing of the first service is forbidden.

Specifically, an execution body of the solution according to the second aspect may be a terminal device, or may be a chip or an integrated circuit in the terminal device. This is not limited. Specifically, the terminal device implements interaction between the first request information and the first response information with a mobility management network element through an access network device. After the first request information is rejected, the terminal device can determine, based on the first parameter in the first response information, the time for sending the second request information to the mobility management network element. In this way, the terminal device does not continuously send the request information to the mobility management network element, so that power consumption of the terminal device can be reduced, and load on a network side can be further reduced.

In the foregoing solution, that "the first request information corresponds to a first position" may be understood as follows: The terminal device sends, at the first position, the first request information to the mobility management network element.

In a possible implementation, the first parameter includes a first radius, and the method further includes: sending the second request information, where the second request information corresponds to a second position, and a distance between the second position and the first position is greater than or equal to the first radius.

In a possible implementation, the first parameter includes first duration, and the method further includes: sending the second request information, where duration between the sending time of the second request information and sending time of the first request information is greater than or equal to the first duration.

In a possible implementation, the method further includes: sending first position information, where the first position information indicates the first position.

According to a third aspect, a communication method is provided, and includes: sending first request information and first position information, where the first request information is used by a terminal device to request to perform a first service; and the first position information indicates a first position of the terminal device, the first position is in a first area, and the first area is an area in which performing of the first service is forbidden; and receiving first response information, where the first response information indicates that the first request information is rejected, the first response information includes a first parameter, the first parameter is for determining sending time of second request information, and the second request information is used by the terminal device to request to perform the first service.

Specifically, an execution body of the solution according to the third aspect may be an access network device, or may be a chip or an integrated circuit in the access network device. This is not limited. Specifically, the access network device is configured to associate the terminal device with a mobility management network element, in other words, the access network device sends the first request information and the first position information that are of the terminal device to the mobility management network element. When the mobility management network element rejects the first request information, the mobility management network element may include the first parameter in the first response information sent to the access network device, and the first parameter is used by the terminal device to determine the time for sending the second request information to the mobility management network element. In this way, the terminal device does not continuously send the request information to the mobility management network element, so that power consumption of the terminal device can be reduced, and load on a network side can be further reduced.

In a possible implementation, the first parameter includes a first radius, and the method further includes: sending the second request information and second position information, where the second position information indicates a second position of the terminal device, and a distance between the second position and the first position is greater than or equal to the first radius.

In a possible implementation, the first parameter includes first duration, and the method further includes: sending the second request information and second position information, where the second position information indicates a second position of the terminal device, and interval duration between the sending time of the second request information and sending time of the first request information is greater than or equal to the first duration.

According to a fourth aspect, a communication method is provided, and includes: An access network device sends first request information and first position information to a mobility management network element, where the first request information is used by a terminal device to request to perform a first service, and the first position information indicates a first position of the terminal device; the mobility management network element determines that the first position is in a first area, where the first area is an area in which performing of the first service is forbidden; and the mobility management network element sends first response information to the access network device, where the first response information indicates that the first request information is rejected, the first response information includes a first parameter, the first parameter is for determining sending time of second request information, and the second request information is used by the terminal device to request to perform the first service.

In a possible implementation, the first parameter includes a first radius, and the method further includes: The access network device sends the second request information and second position information to the mobility management network element, where the second position information indicates a second position of the terminal device, and a distance between the second position and the first position is greater than or equal to the first radius.

In a possible implementation, the first parameter includes first duration, and the method further includes: The access network device sends the second request information and second position information to the mobility management network element, where the second position information indicates a second position of the terminal device, and interval duration between the sending time of the second request information and sending time of the first request information is greater than or equal to the first duration.

With reference to any one of the first aspect to the fourth aspect, the first service is a registration service; or the first service is a session establishment request service.

With reference to any one of the first aspect to the fourth aspect, the first service is the registration service, and the first area is a forbidden area; or the first service is the session establishment request service, and the first area is a service restriction area.

According to a fifth aspect, a communication apparatus is provided. The communication apparatus may be a mobility management network element, an apparatus (for example, a chip, a chip system, or a circuit) in the mobility management network element, or an apparatus that can be matched and used with the mobility management network element.

In a possible implementation, the communication apparatus may include a one-to-one corresponding module or unit configured to perform the method/operation/step/action described in the first aspect. The module or unit may be a hardware circuit, or may be software, or may be implemented by the hardware circuit in combination with the software.

In a possible implementation, the communication apparatus includes: a receiving unit, configured to receive first request information and first position information, where the first request information is used by a terminal device to request to perform a first service, and the first position information indicates a first position of the terminal device; a processing unit, configured to determine that the first position is in a first area, where the first area is an area in which performing of the first service is forbidden; and a sending unit, further configured to send first response information, where the first response information indicates that the first request information is rejected, the first response information includes a first parameter, the first parameter is for determining sending time of second request information, and the second request information is used by the terminal device to request to perform the first service.

The communication apparatus according to the fifth aspect may be further configured to perform the method according to any one of the first aspect and possible implementations thereof.

According to a sixth aspect, a communication apparatus is provided. The communication apparatus may be a terminal device, an apparatus (for example, a chip, a chip system, or a circuit) in the terminal device, or an apparatus that can be matched and used with the terminal device.

In a possible implementation, the communication apparatus may include a one-to-one corresponding module or unit configured to perform the method/operation/step/action described in the second aspect. The module or unit may be a hardware circuit, or may be software, or may be implemented by the hardware circuit in combination with the software.

In a possible implementation, the communication apparatus includes: a sending unit, configured to send first request information, where the first request information is for requesting to perform a first service; a receiving unit, further configured to receive first response information, where the first response information indicates that the first request information is rejected, the first response information includes a first parameter, the first parameter is for determining sending time of second request information, and the second request information is for requesting to perform the first service; and the first request information corresponds to a first position, the first position is in a first area, and the first area is an area in which performing of the first service is forbidden.

The communication apparatus according to the sixth aspect may be further configured to perform the method according to any one of the second aspect.

According to a seventh aspect, a communication apparatus is provided. The communication apparatus may be an access network device, an apparatus (for example, a chip, a chip system, or a circuit) in the access network device, or an apparatus that can be matched and used with the access network device.

In a possible implementation, the communication apparatus may include a one-to-one corresponding module or unit configured to perform the method/operation/step/action described in the third aspect. The module or unit may be a hardware circuit, or may be software, or may be implemented by the hardware circuit in combination with the software.

In a possible implementation, the communication apparatus includes: a sending unit, configured to send first request information and first position information, where the first request information is used by a terminal device to request to perform a first service; and the first position information indicates a first position of the terminal device, the first position is in a first area, and the first area is an area in which performing of the first service is forbidden; and a receiving unit, further configured to receive first response information, where the first response information indicates that the first request information is rejected, the first response information includes a first parameter, the first parameter is for determining sending time of second request information, and the second request information is used by the terminal device to request to perform the first service.

The communication apparatus according to the seventh aspect may be further configured to perform the method according to any one of the third aspect.

According to an eighth aspect, a communication apparatus is provided, and includes a processor. The processor is configured to cause, by executing a computer program or instructions or by using a logic circuit, the communication apparatus to perform the method according to the first aspect and any one of possible implementations of the first aspect; the communication apparatus to perform the method according to the second aspect and any one of possible implementations of the second aspect; or the communication apparatus to perform the method according to the third aspect and any one of possible implementations of the third aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a ninth aspect, a communication apparatus is provided, and includes a logic circuit and an input/output interface. The input/output interface is configured to input and/or output a signal; and the logic circuit is configured to perform the method according to the first aspect and any one of possible implementations of the first aspect; or the logic circuit is configured to perform the method according to the second aspect and any one of possible implementations of the second aspect; or the logic circuit is configured to perform the method according to the third aspect and any one of possible implementations of the third aspect.

According to a tenth aspect, a computer-readable storage medium is provided. The computer-readable storage medium stores a computer program or instructions. When the computer program or the instructions are run on a computer, the method according to the first aspect and any one of possible implementations of the first aspect is performed; or the method according to the second aspect and any one of possible implementations of the second aspect is performed; or the method according to the third aspect and any one of possible implementations of the third aspect is performed.

According to an eleventh aspect, a computer program product is provided, and includes instructions. When the instructions are run on a computer, the method according to the first aspect and any one of possible implementations of the first aspect is performed; or the method according to the second aspect and any one of possible implementations of the second aspect is performed; or the method according to the third aspect and any one of possible implementations of the third aspect is performed.

According to a twelfth aspect, a communication system is provided, and includes an access network device and a mobility management network element. The mobility management network element is configured to perform the method according to the first aspect and any one of possible implementations of the first aspect. The access network device is configured to perform the method according to the third aspect and any one of possible implementations of the third aspect. Alternatively, the access network device and the mobility management network element are configured to perform the method according to the fourth aspect and any one of possible implementations of the fourth aspect.

Descriptions of beneficial effects of the second aspect to the twelfth aspect may correspond to descriptions of beneficial effects of the first aspect.

### BRIEF DESCRIPTION OF DRAWINGS

FIG. 1 is a diagram of an applicable communication system 100 according to an embodiment of this application;
FIG. 2 is a diagram of a 5G network architecture 200 according to an embodiment of this application;
FIG. 3 is a diagram of an interaction procedure of a communication method 300 according to an embodiment of this application;
FIG. 4 is a diagram of an interaction procedure of a communication method 400 according to an embodiment of this application;
FIG. 5 is a block diagram of a communication apparatus 500 according to an embodiment of this application;
FIG. 6 is a block diagram of a communication apparatus 600 according to an embodiment of this application;
FIG. 7 is a block diagram of a communication apparatus 700 according to an embodiment of this application;
FIG. 8 is a block diagram of a communication apparatus 800 according to an embodiment of this application;
FIG. 9 is a block diagram of a communication apparatus 900 according to an embodiment of this application;

### DESCRIPTION OF EMBODIMENTS

For ease of understanding of embodiments of this application, the following several points are first described.
1. In embodiments of this application, if there are no special descriptions and a logic conflict, terms and/or descriptions in different embodiments are consistent and may be mutually referenced, and technical features in the different embodiments may be combined to form a new embodiment based on an internal logical relationship of embodiments.
2. Numbers involved in this application are merely used for differentiation for ease of description, but are not used to limit the scope of this application. Sequence numbers involved in this application do not mean execution sequences. Execution sequences of processes should be determined based on functions and internal logic of the processes. For example, terms "first", "second", "third", "fourth", and other various term labels (if any) in the specification, claims, and accompanying drawings of this application are used for distinguishing similar objects, but are not necessarily used for describing a specific sequence or order. It should be understood that, data used in such a way are interchangeable in proper circumstances, so that embodiments described herein can be implemented in other sequences than the sequence illustrated or described herein.
3. Terms "include", "have", and any other variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.
4. In this application, "indicate" may be understood as "enable", and "enable" may include direct enabling and indirect enabling. When a piece of information is described as being for enabling A, the information may include directly enabling A or indirectly enabling A, but this does not mean that A is definitely carried in the information.
   If information enabled by the information is referred to as to-be-enabled information, in a specific implementation process, there are many manners to enable the to-be-enabled information, for example, but not limited to, the to-be-enabled information may be directly enabled. For example, the to-be-enabled information is enabled by using the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and another part of the to-be-enabled information is known or agreed in advance. For example, enabling of specific information may alternatively be implemented by using a pre-agreed (for example, stipulated in a protocol) arrangement sequence of all information, to reduce enabling overheads to some extent. In addition, a common part of all the information may be identified and enabled in a unified manner, to reduce enabling overheads caused by separately enabling the same information.
5. "Storage" or "saving" involved in this application may mean being saved in one or more memories. The one or more memories may be separately arranged, or may be integrated into an encoder or a decoder, a processor, or a communication apparatus. Alternatively, a part of the one or more memories may be separately arranged, and a part of the one or more memories are integrated into the decoder, the processor, or the communication apparatus. A type of the memory may be a storage medium in any form. This is not limited in this application.
6. A "protocol" involved in this application may be a standard protocol in the field of communication, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.
7. Arrows or blocks shown by dashed lines in diagrams of the accompanying drawings in the specification of this application indicate optional steps or optional modules.
8. Any embodiment or design solution described as an "example" or "for example" in this application should not be construed as being more preferred or having more advantages than another embodiment or design solution. Exactly, terms such as "example" or "for example" are used for presenting a related concept in a specific manner for ease of understanding.
9. In this application, unless otherwise specified, "/" indicates that associated objects are in an "or" relationship. For example, A/B may indicate A or B. "And/or" in this application merely describes an association relationship between the associated objects and indicates that three relationships may exist. For example, A and/or B may indicate the following cases: Only A exists, both A and B exist, and only B exists, where A and B may be singular or plural.

To better understand technical solutions of this application, the following describes a communication system, a communication method, and a communication apparatus from the following aspects.

### I. Communication system

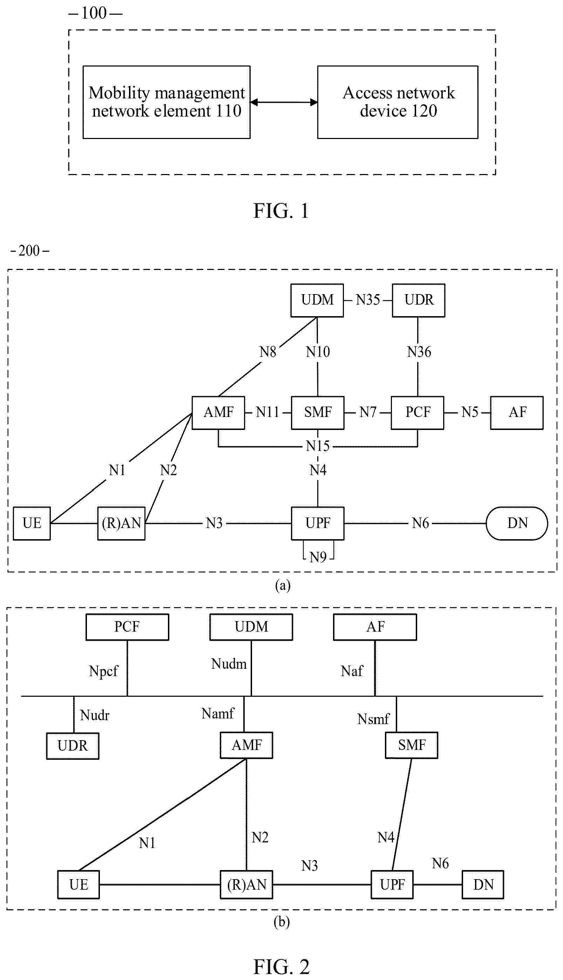

To resolve the problem mentioned in the background, an embodiment of this application provides an applicable communication system 100. As shown in FIG. 1, the communication system 100 includes a mobility management network element 110 and an access network device 120.

In the communication system 100, the access network device 120 is configured to send request information 1 and position information 1 to the mobility management network element 110. The mobility management network element 110 is configured to: receive the request information 1 and the position information 1 from the access network device 120, determine that a position 1 indicated by the position information 1 is in an area 1, and send response information 1 to the access network device 120. The access network device 120 is further configured to receive a response information 1.

In specific implementation, the access network device 120 is further configured to receive request information 1 from a terminal device 130, and send the response information 1 to the terminal device 130.

The request information 1 is used by the terminal device 130 to request to perform a service 1 (for example, a first service) (where the service 1 may be a registration service; or the service 1 is a session establishment request service, or the like), and the position information 1 indicates a position of the terminal device 130. The position that is of the terminal device 130 and that is indicated by the position information 1 corresponds to the request information 1. In other words, the position information 1 indicates a position of the terminal device 130 when the terminal device 130 sends the request information 1. For example, the position information 1 indicates a position 1 (for example, a first position) of the terminal device 130. To be specific, the terminal device 130 sends the request information 1 to the access network device 120 at the position 1, and the access network device 120 sends the request information 1 and the position information 1 to the mobility management network element 110, where the position information 1 indicates the position 1 of the terminal device 130.

The position information 1 is obtained by the access network device 120. In an example, the terminal device 130 reports, to the access network device 120, information about the position of the terminal device 130 when the terminal device 130 sends the request information 1, and the access network device 120 sends both the request information 1 and the position information 1 to the mobility management network element 110. In another example, after the access network device 120 receives the request information 1 from the terminal device 130, the access network device 120 may obtain the position information 1 of the terminal device 130 based on an existing approach, and send the position information 1 to the mobility management network element 110. A specific approach in which the access network device 120 sends the request information 1 and the position information 1 to the mobility management network element 110 is not limited in this application.

In a possible implementation, the access network device 120 may modify a format of the request information 1, but this does not hinder the mobility management network element 110 from determining that the terminal device 130 is requesting to perform the service 1.

In a possible implementation, the access network device 120 may separately send the request information 1 and the position information 1 to the mobility management network element 110 in different messages, or may send the request information 1 and the position information 1 to the mobility management network element 110 in a same message. This is not limited.

After the mobility management network element 110 obtains the position information 1, the mobility management network element 110 determines, based on the position information 1, whether the position 1 is in the area 1, where the area 1 is an area in which the terminal device 130 is forbidden to perform the service 1.

Specifically, the mobility management network element 110 may obtain a configuration parameter of the area 1 from another network element (for example, a data management network element), and when determining, based on the position information 1, that the position 1 is in the area 1, the mobility management network element 110 rejects the request information 1. In this application, the configuration parameter of the area 1 can also be configured in the mobility management network element 110. In this way, the mobility management network element 110 does not need to obtain the configuration parameter of the area 1 from the another network element.

When the mobility management network element 110 determines to reject the request information 1, the mobility management network element 110 sends the response information 1 (for example, first response information) to the terminal device 130 through the access network device 120, where the response information 1 indicates that the request information 1 is rejected (or indicates that a request to perform the service 1 at the position 1 is rejected). The response information 1 includes a parameter 1 (for example, a first parameter), the parameter 1 is used by the terminal device 130 to determine sending time of request information 2 (for example, second request information), and the request information 2 is used by the terminal device 130 to request to perform the service 1. The parameter 1 may be locally configured in the mobility management network element 110, or may be calculated and determined by the mobility management network element 110 based on a relative distance between the area 1 and the terminal device 130 and the position/a speed of the terminal device 130. This is not limited. The terminal device 130 can determine the sending time of the request information 2 based on the parameter 1.

In conclusion, when the mobility management network element 110 determines, based on the position information 1, that the position 1 is in the area 1, the mobility management network element 110 includes the parameter 1 in the response information 1, and the terminal device 130 determines, based on the parameter 1, sending time of another piece of request information for requesting to perform the service 1. In this way, that the terminal device 130 continuously sends the request information after the request information 1 is rejected can be effectively avoided, to effectively reduce power consumption of the terminal device.

In comparison with an existing solution in which the mobility management network element 110 sends only response information that does not carry the parameter 1 to the terminal device 130, according to the foregoing technical solution, the power consumption of the terminal device and load on a network side can be effectively reduced in embodiments of this application.

In this application, the access network device 120 is a device having a wireless transceiver function, and is configured to communicate with the terminal device 130. For example, the terminal device 130 implements interaction with the mobility management network element 110 through the access network device 120. The access network device 120 may be a node in a radio access network (radio access network, RAN), and may also be referred to as a base station or a RAN node. The access network device 120 may be an evolved NodeB (evolved NodeB, eNB, or eNodeB) of LTE; or a base station of a 5G network, for example, a gNodeB (gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like. For example, the foregoing RAN may be configured as a RAN defined in a 3GPP protocol, an open radio access network (open radio access network, O-RAN), or a cloud access network (cloud radio access network, C-RAN).

The access network device 120 may further include base stations in various forms, such as a macro base station, a micro base station (also referred to as a small cell), a relay station, a transmission reception point (transmission reception point, TRP), a transmission point (transmission point, TP), a mobile switching center, a device that functions as a base station in device-to-device (device-to-device, D2D) communication, vehicle-to-everything (vehicle-to-everything, V2X) communication, and machine-to-machine (machine-to-machine, M2M) communication, and a network device in an NTN communication system. This is not specifically limited in this application.

The access network device 120 may further include a network element or a module that implements a part of functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between the DU and the RU in an O-RAN system, or the like. This is not limited.

An apparatus configured to implement a function of the access network device 120 may be an access network device, or may be an apparatus that can support the access network device in implementing the function, for example, a chip system. The apparatus may be mounted in the access network device or matched and used with the access network device. In embodiments of this application, the chip system may include a chip, or may include the chip and another discrete component.

The terminal device 130 is a device having wireless receiving and sending functions, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine type communication device, or may be a cordless phone, a session initiation protocol (session initiation protocol, SIP) phone, a wireless local loop (wireless local loop, WLL) station, a personal digital assistant (personal digital assistant, PDA), a customer-premises equipment (customer-premises equipment, CPE), a smart point of sale (point of sale, POS) machine, a handheld device having a wireless communication function, a computing device or another processing device connected to the wireless modem, a vehicle-mounted device, a communication device carried on a high altitude aircraft, a wearable device, an unmanned aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited.

A communication apparatus configured to implement a function of the terminal device 130 may be a terminal device, or may be an apparatus that can support the terminal device in implementing the function, for example, a chip system. The apparatus may be mounted in the terminal device or matched and used with the terminal device. In this application, the chip system may include a chip, or may include the chip and another discrete component.

The communication system 100 may be used in the following systems or scenarios: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system or NR, a system evolved after 5G such as a 6G system, and a non-terrestrial network (non-terrestrial network, NTN) system such as an inter-satellite communication system and a satellite communication system. The satellite communication system includes a satellite base station and a terminal device. The satellite base station provides a communication service for the terminal device. The satellite base station may also communicate with a terrestrial base station. A satellite may be used as the base station, or may be used as the terminal device. The satellite may be a non-terrestrial base station or a non-terrestrial device such as an unmanned aerial vehicle, a hot air balloon, a low-orbit satellite, a medium-orbit satellite, or a high-orbit satellite.

The technical solution disclosed in the communication system 100 is applicable to both a homogeneous network scenario and a heterogeneous network scenario, and has no limitation on a transmission point. The technical solution may be coordinated multipoint transmission between macro base stations, between micro base stations, and between a macro base station and a micro base station, and is applicable to both an FDD system and a TDD system. The technical solution disclosed in the communication system 100 is applicable to a low-frequency scenario (sub 6G), and also applicable to a high-frequency scenario (above 6 GHz), terahertz, optical communication, and the like.

The technical solution disclosed in the communication system 100 may also be applied to a scenario in which the terminal device is connected to a single base station. The base station connected to the terminal device 130 and a core network (core network, CN) connected to the base station are of a same standard. For example, if the CN is a 5G core, the base station corresponds to a 5G base station, and the 5G base station is directly connected to the 5G core; or the CN is a 6G core, the base station is a 6G base station, and the 6G base station is directly connected to the 6G core.

The technical solution disclosed in the communication system 100 may also be applicable to a macro-micro scenario formed by base stations in different forms in a communication network. For example, the base station may be a satellite, an air balloon station, or an unmanned aerial vehicle station. The technical solution disclosed in the communication system 100 is also applicable to a scenario in which both a wide-coverage base station and a small-coverage base station exist. The technical solution disclosed in the communication system 100 may be applied to a scenario in which a high-reliability service requirement exists, such as a port, industrial manufacturing, transportation, or a coal mine. The technical solution disclosed in the communication system 100 may be further applied to 5.5G, 6G, and a wireless communication system after 6G. An applicable scenario includes but is not limited to terrestrial cellular communication, NTN, satellite communication, high altitude platform station (high altitude platform station, HAPS) communication, V2X, integrated access and backhaul (integrated access and backhaul, IAB), reconfigurable intelligent surface (reconfigurable intelligent surface, RIS) communication, and the like.

The following uses an example in which the communication system 100 is used in a 5G network architecture for description. FIG. 2 is a diagram of the communication system 100 used in the 5G network architecture. As shown in FIG. 2(a), a 5G network architecture 200 may include:

### 1. AMF

The AMF mainly performs a function such as mobility management or access authentication/authorization. In addition, the AMF is further responsible for transferring a user policy between a terminal device and a policy control function (policy control function, PCF) network element. In addition, the AMF may receive non-access stratum (non-access stratum, NAS) signaling (including mobility management (mobility management, MM) signaling and session management (session management, SM) signaling) of the terminal device and related signaling (for example, base station-granularity next generation (next generation, NG) network 2 interface signaling exchanged with the AMF) of an access network device, to complete a user registration procedure, SM signaling forwarding, and mobility management.

The AMF may be a hyponym of the mobility management network element 110.

### 2. Session management network element (session management function, SMF)

The SMF is mainly for session management, allocation and management of an Internet protocol (internet protocol, IP) address of a terminal device, selection of a termination point that can manage a user plane function and a policy control and charging function interface, downlink data notification, and the like. The SMF may also be for completing procedures such as establishment, release, and update related to a protocol data unit (protocol data unit, PDU) session.

### 3. PCF

The PCF may be responsible for user policy management, including a mobility-related policy and a PDU session-related policy, such as a QoS policy or a charging policy.

### 4. Unified data repository (unified data repository, UDR)

The UDR mainly includes the following functions: (1) The UDR is used by a UDM to store subscription data or read the subscription data; (2) the UDR is used by a PCF to store policy data or read the policy data; and (3) the UDR stores exposed data or the exposed data is read from the UDR.

The UDR and an NF that accesses the UDR have a same PLMN, that is, are in a same network. In other words, a Nudr interface is an internal interface of the PLMN.

### 5. UDM

The UDM mainly includes the following functions: unified data management, support for authentication credential processing in a 3GPP authentication and key agreement mechanism, user identity processing, access authorization, registration and mobility management, subscription management, short message service management, and the like.

### 6. AF

The AF mainly includes the following functions: interaction with a 3GPP core network to provide a business or a service, including interaction with an NEF, interaction with a policy architecture, and the like.

### 7. User plane function (user plane function, UPF) network element

The UPF is used as an interface with a data network, and completes functions such as forwarding of user plane data, charging statistics based on a session/flow level, and bandwidth throttling, that is, packet routing and forwarding, QoS processing of the user plane data, and the like.

### 8. (Radio) access network (radio access network, (R)AN) device

The (R)AN can manage a radio resource, provide an access service for a terminal device, and complete forwarding of data of the terminal device between the terminal device and a core network. The (R)AN may also be understood as a base station. For details, refer to the foregoing descriptions.

### 9. Data network (data network, DN)

The DN is for providing services, such as an operator service, an Internet access service, and a third-party service, and includes a server, where a server end implements video source encoding, rendering, and the like.

In the foregoing descriptions, the network element may be a network element in a hardware device, a software function running on dedicated hardware, or a virtualization function instantiated on a platform (for example, a cloud platform). The foregoing function network element may be divided into one or more services. Further, a service independent of a network function may further exist. An instance of the function network element, an instance of a service included in the function network element, or a service instance that exists and that is independent of a network function may all be referred to as a service instance.

It can be learned from (a) in FIG. 2 that, the terminal device accesses a 5GS through the access network device; the terminal device communicates with the AMF through an NG1 interface (N1 for short); the access network device communicates with the AMF through an NG2 interface (N2 for short); the access network device communicates with the UPF through an NG3 interface (N3 for short); the AMF communicates with the SMF through an NG11 interface (N11 for short); the AMF communicates with the UDM through an NG8 interface (N8 for short); the AMF communicates with the PCF through an NG15 interface (N15 for short); the SMF communicates with the PCF through an NG7 interface (N7 for short); the SMF communicates with the UPF through an NG4 interface (N4 for short); the UPF accesses the DN through an NG6 interface (N6 for short); the UDM communicates with the UDR through an NG35 interface (N35 for short); the PCF communicates with the UDR through an NG36 interface (N36 for short), and the like.

An interface between control plane network elements in (a) in FIG. 2 is a point-to-point interface. In actual implementation, the interface between the control plane network elements may alternatively be a service-based interface shown in (b) in FIG. 2. In (b) in FIG. 2, Npcf, Nudr, Nudm, Naf, Namf, and Nsmf are respectively service-based interfaces provided by the PCF, the UDR, the UDM, the AF, the AMF, and the SMF, and are configured to invoke corresponding service-based operations.

Names of network elements shown in (a) in FIG. 2 or (b) in FIG. 2 are merely names, and the names do not constitute any limitation on functions of the network elements. In a 5G network and another future network, the foregoing network elements may alternatively have other names. This is not specifically limited in embodiments of this application. For example, in a 6G network, a part of or all of the foregoing network elements may still use terms in 5G, and may alternatively have other names, or the like. A general description is provided herein. Details are not described again below.

A 5G network structure shown in FIG. 2 is merely an example for description. The 5G network structure shown in FIG. 2 may further include another network element that is not mentioned, such as an authentication server function (authentication server function, AUSF) network element, a network exposure function (network element function, NEF) network element, or a network function repository function (network function repository function, NRF) network element.

In addition, the "network element" in this specification may also be referred to as a network function instance (network function instance), an NF, a device, an apparatus, a module, or the like. This is not specifically limited in this application. In addition, the foregoing name is defined merely for ease of distinguishing between different functions, and should not constitute any limitation. This application does not exclude a possibility that another name is used in the 5G network and the another future network. For example, in a 6G network, a part or all of the foregoing network elements may still use terms in 5G, and may alternatively have other names, or the like. A name of the interface between the foregoing network elements is merely an example. In specific implementation, the interface may have another name. This is not specifically limited. In addition, a name of a message (or signaling) transmitted between the foregoing network elements is merely an example, and do not constitute any limitation on a function of the message.

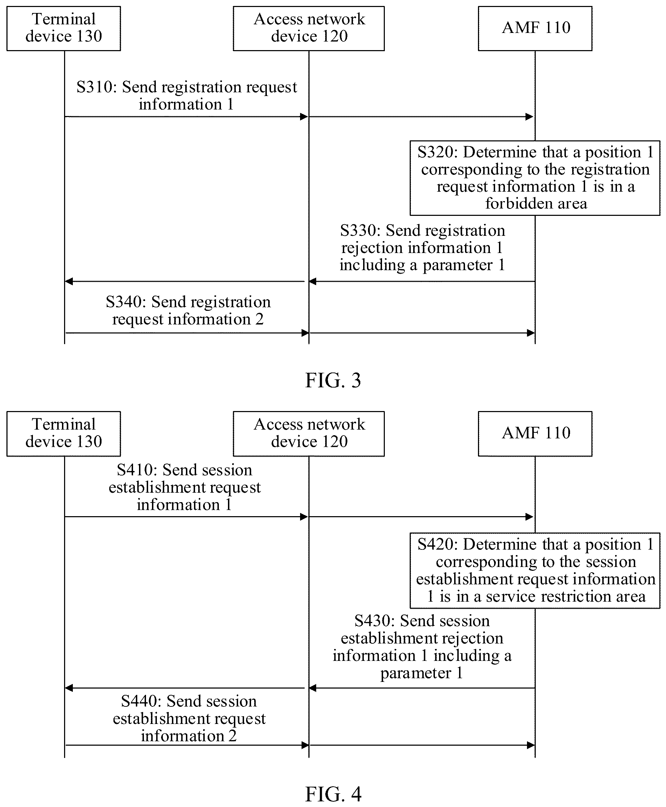

The following further describes interaction between the mobility management network element 110 (where the AMF is used as an example for description below) and the access network device 120 with reference to FIG. 3 and FIG. 4.

### II. Communication method

FIG. 3 is a diagram of an interaction procedure of a communication method 300 according to an embodiment of this application. The method 300 relates to interaction between an AMF 110, an access network device 120, and a terminal device 130. The method 300 includes the following steps.

S310: The terminal device 130 sends registration request information 1 to the AMF 110.

Correspondingly, the AMF 110 receives the registration request information 1 through the access network device 120.

The terminal device 130 sends the registration request information 1 to the access network device 120, and the access network device 120 sends the registration request information 1 to the AMF 110. The registration request information 1 is used by the terminal device 130 to request to perform a registration service.

The registration request information 1 may be request information 1, and the registration service may be a service 1. In addition to sending the registration request information 1 to the AMF 110, the access network device 120 further needs to send position information 1 to the AMF 110, where the position information 1 indicates a position 1 of the terminal device 130 when the terminal device 130 sends the registration request information 1. For descriptions of sending the position information 1 by the access network device 120 to the AMF, refer to FIG. 1. Details are not described herein again.

S320: The AMF 110 determines that the position 1 corresponding to the registration request information 1 is in a forbidden area.

The AMF 110 can determine, based on the position information 1, that a position of the terminal device 130 is the position 1. Further, the AMF 110 determines, based on configuration information of a forbidden area (forbidden area) subscribed by the terminal device 130, whether the position 1 is in the forbidden area, and the forbidden area is an area in which the terminal device 130 is forbidden to perform a registration procedure or the registration service.

When the service 1 is the registration service, an area 1 is the forbidden area. The AMF 110 determines, based on the position information 1 of the terminal device 130 and a configuration parameter of the forbidden area, whether to reject the registration request information 1.

S330: The AMF 110 sends registration rejection information 1 to the terminal device 130.

Correspondingly, the terminal device 130 receives the registration rejection information 1 from the AMF 110 through the access network device 120.

When the AMF 110 may determine, based on the position information 1 and the configuration information of the forbidden area, that the position 1 is in the forbidden area, the AMF 110 rejects the registration request information 1 of the terminal device 130, and sends the registration rejection information 1 to the terminal device 130 through the access network device 120. The registration rejection information 1 includes a cause value (for example, a cause value #15), and the cause value indicates a cause for rejecting the registration request information 1 by the AMF 110 to the terminal device 130. In addition, the registration rejection information 1 further includes a parameter 1, and the parameter 1 is used by the terminal device 130 to determine sending time of registration request information 2. The registration rejection information 1 may be response information 1.

In a possible implementation, the parameter 1 includes a radius 1 (for example, a first radius) and/or duration 1 (for example, first duration). When the parameter 1 includes the radius 1, and the terminal device 130 moves from the position 1 by a distance greater than or equal to the radius 1, the terminal device 130 sends the registration request information 2 to the AMF 110. When the parameter 1 includes the duration 1, after the registration request information 1 is sent and an interval to the sending is the duration 1, the terminal device 130 then sends the registration request information 2 to the AMF 110. When the parameter 1 includes both the radius 1 and the duration 1, the terminal device 130 determines the sending time of the registration request information 2 based on either of the foregoing two parameters (which is not limited herein).

S340: The terminal device 130 sends the registration request information 2 to the AMF 110.

Correspondingly, the AMF 110 receives the registration request information 2 through the access network device 120. The access network device 120 further sends position information 2 of the terminal device to the AMF 110, where the position information 2 indicates a position 2 of the terminal device 130 when the terminal device 130 sends the registration request information 2.

When the parameter 1 includes the radius 1, a distance between the position 2 and the position 1 is greater than or equal to the radius 1. When the parameter 1 includes the duration 1, interval duration between the sending time of the registration request information 2 and sending time of the registration request information 1 is greater than or equal to the duration 1.

After the registration request information 1 is rejected, the terminal device 130 can determine the sending time of the registration request information 2 based on the parameter 1. In this way, the terminal device 130 does not continuously send the registration request information 2 to the AMF 110 after the registration request information 1 is rejected, to effectively reduce power consumption of the terminal device and load on a network side.

It should be noted that, the method 300 is described by using an example in which the service 1 is the registration service, and the area 1 is the forbidden area, but is not limited thereto. For details, refer to FIG. 4.

FIG. 4 is a diagram of an interaction procedure of a communication method 400 according to an embodiment of this application. The method 400 mainly relates to interaction between an AMF 110, an access network device 120, and a terminal device 130. The method 400 includes the following steps.

S410: The terminal device 130 sends session establishment request information 1 to the AMF 110.

Correspondingly, the AMF 110 receives the session establishment request information 1 from the terminal device 130 through the access network device 120.

The terminal device 130 sends the session establishment request information 1 to the access network device 120, and the access network device 120 sends the session establishment request information 1 to the AMF 110. The session establishment request information 1 is used by the terminal device 130 to request to perform a session establishment service, and the session establishment service may be a PDU session establishment service, but is not limited thereto.

The session establishment request information 1 may be request information 1, and the session establishment service may be a service 1. When receiving the session establishment request information 1, in addition to sending the session establishment request information 1 to the AMF 110, the access network device 120 further sends position information 1 to the AMF 110, where the position information 1 indicates a position 1 of the terminal device 130 when the terminal device 130 sends the session establishment request information 1. For descriptions of sending the position information 1 by the access network device 120 to the AMF, refer to FIG. 1. Details are not described herein again.

S420: The AMF 110 determines that the position 1 corresponding to the session establishment request information 1 is in a service restriction area.

The AMF 110 may determine, based on configuration information of the service restriction area (service restriction area) subscribed by the terminal device 130, whether the position 1 is in the service restriction area, and the service restriction area is an area in which the terminal device 130 is forbidden to perform a session and another service.

When the service 1 is the session establishment request service, an area 1 is the service restriction area. The AMF 110 determines, based on the position information 1 and a configuration parameter of the service restriction area, whether to reject the session establishment request information 1.

S430: The AMF 110 sends session establishment rejection information 1 to the terminal device 130.

Correspondingly, the terminal device 130 receives the session establishment rejection information 1 through the access network device 120.

When the AMF 110 determines, based on the position information 1 and the configuration information of the service restriction area, that the position 1 is in the service restriction area, the AMF 110 rejects the session establishment request information 1 of the terminal device 130, and sends the session establishment rejection information 1 to the terminal device 130 through the access network device 120. The session establishment rejection information 1 includes a cause value (for example, a cause value #28), and the cause value indicates a cause for rejecting the session establishment request information 1 by the AMF 110 to the terminal device 130. In addition, the session establishment rejection information 1 further includes a parameter 1, and the parameter 1 is used by the terminal device 130 to determine an occasion for sending session establishment request information 2 to the AMF 110 again. The session establishment rejection information 1 may be the foregoing response information 1.

In an implementation, the parameter 1 may include a radius 1 (for example, a first radius) and/or duration 1 (for example, first duration). For example, when the parameter 1 includes the radius 1, the terminal device 130 may send the session establishment request information 2 to the AMF 110 when moving from the position 1 by a corresponding distance greater than or equal to the radius 1. For example, when the parameter 1 includes the duration 1, after the session establishment request information 1 is sent and an interval to the sending is the duration 1, the terminal device 130 may then send the session establishment request information 2 to the AMF 110. When the parameter 1 includes both the radius 1 and the duration 1, the terminal device 130 may determine the occasion for sending the session establishment request information 2 to the AMF 110 based on the foregoing two parameters.

S440: The terminal device 130 sends the session establishment request information 2 to the AMF 110.

Correspondingly, the AMF 110 receives the session establishment request information 2 from the terminal device 130 through the access network device 120. The access network device 120 further sends position information 2 of the terminal device to the AMF 110, where the position information 2 indicates a position 2 of the terminal device 130 when the terminal device 130 sends the session establishment request information 2.

When the parameter 1 includes the radius 1, a distance between the position 2 and the position 1 is greater than or equal to the radius 1. When the parameter 1 includes the duration 1, interval duration between the sending time of the session establishment request information 2 and sending time of the session establishment request information 1 is greater than or equal to the duration 1.

After the session establishment request information 1 is rejected, the terminal device 130 can determine the sending time of the session establishment request information 2 based on the parameter 1. In this way, the terminal device 130 does not continuously send the session establishment request information to the AMF 110 after the session establishment request information 1 is rejected, to effectively reduce power consumption of the terminal device and load on a network side.

It should be noted that, the method 400 is described by using an example in which the service 1 is the session establishment service, and the area 1 is the service restriction area, but is not limited thereto.

With reference to FIG. 3 and FIG. 4, it can be learned that, the service 1 may be the registration service, or may be the session establishment service. When the service 1 is the registration service, the area 1 is the forbidden area, the request information 1 is the registration request information 1, the response information 1 is the registration rejection information 1, and the parameter 1 includes the radius 1 and/or the duration 1. When the service 1 is the session establishment service, the area 1 is the service restriction area, the request information 1 is the session establishment request information 1, the response information 1 is the session establishment rejection information 1, and the parameter 1 includes the radius 1 and/or the duration 1.

It should be noted that, the foregoing content is described by using examples in which the service 1 is the registration service and the session establishment service separately, but another application scenario is not limited. In addition, whether another procedure is included between S310 to S340, and whether another procedure is included between S410 to S440 are not limited in this application.

### III. Communication apparatus

To implement functions in the foregoing methods, a mobility management network element 110, a terminal device 130, and an access network device 120 may each include a hardware structure and/or a software module, to implement the foregoing functions in a form of the hardware structure, the software module, or a combination of the hardware structure and the software module. Whether a specific function in the foregoing functions is performed by using the hardware structure, the software module, or the combination of the hardware structure and the software module depends on specific applications and design constraint conditions of the technical solutions.

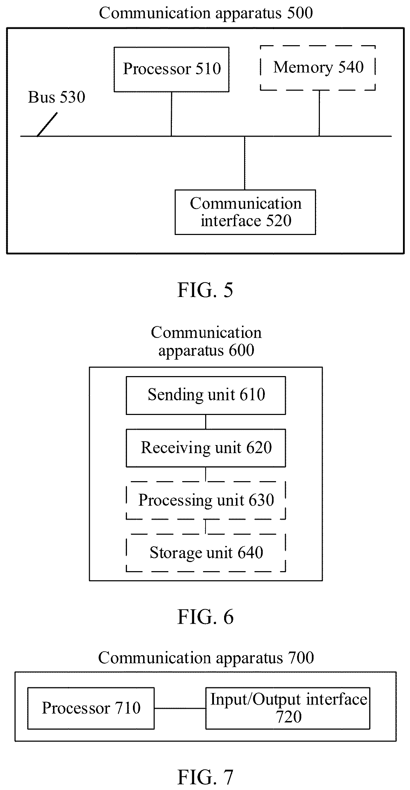

FIG. 5 is a block diagram of a communication apparatus 500 according to an embodiment of this application. The communication apparatus 500 includes a processor 510 and a communication interface 520. The processor 510 and the communication interface 520 are connected to each other through a bus 530. The communication apparatus 500 may be a terminal device 130, an access network device 120, or a mobility management network element 110.

Optionally, the communication apparatus 500 further includes a memory 540.

The memory 540 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 540 is configured to store related instructions and data.

The processor 510 may be one or more central processing units (central processing units, CPUs). When the processor 510 is one CPU, the CPU may be a single-core CPU, or may be a multi-core CPU.

When the communication apparatus 500 is the terminal device 130, for example, the processor 510 is configured to perform the following operations: sending request information 1; and receiving response information 1.

When the communication apparatus 500 is the access network device 120, for example, the processor 510 is configured to perform the following operations: sending request information 1 and position information 1; and receiving response information 1.

When the communication apparatus 500 is the mobility management network element 110, for example, the processor 510 is configured to perform the following operations: receiving request information 1 and position information 1; and sending response information 1.

The foregoing content is merely used as an example for description. When the communication apparatus 500 is the terminal device 130, the access network device 120, or the mobility management network element 110, the communication apparatus 500 is responsible for performing methods or steps related to the terminal device 130, the access network device 120, or the mobility management network element 110 in the foregoing method embodiments.

The foregoing descriptions are merely an example for description. For specific content, refer to the content shown in the foregoing method embodiments. In addition, for implementation of operations in FIG. 5, refer to corresponding descriptions in the method embodiments shown in FIG. 1 to FIG. 4.

FIG. 6 is a block diagram of a communication apparatus 600 according to an embodiment of this application. The communication apparatus 600 may be an access network device 120, a terminal device 130, or a mobility management network element 110, or may be a chip or a module in the access network device 120, the terminal device 130, or the mobility management network element 110. The communication apparatus 600 includes a sending unit 610 and a receiving unit 620. The following provides example descriptions of the sending unit 610 and the receiving unit 620.

For example, when the communication apparatus 600 is the terminal device 130, the sending unit 610 is configured to: send request information 1, and receive response information 1.

Optionally, the communication apparatus 620 may further include a processing unit 630, and the processing unit 630 is configured to determine sending time of request information 2 based on a parameter 1.

For example, when the communication apparatus 600 is the access network device 120, the sending unit 610 is configured to send request information 1 and position information 1, and the receiving unit 620 is configured to receive response information 1.

Optionally, the communication apparatus 600 may further include a processing unit 630, and the processing unit 630 is configured to perform content related to steps such as processing and coordination of the access network device 120.

For example, when the communication apparatus 600 is the mobility management network element 110, the receiving unit 620 is configured to receive request information 1 and position information 1, and the sending unit 610 is configured to send response information 1.

Optionally, the communication apparatus 600 may further include a processing unit 630, and the processing unit 630 is configured to perform content related to steps such as processing and coordination of the mobility management network element 110. For example, the mobility management network element 110 determines a parameter 1.

In addition, the communication apparatus 600 may further include a storage unit 640 (regardless of whether the communication apparatus 600 is the terminal device 130, the access network device 120, or the mobility management network element 110), and the storage unit 640 is configured to store a program or code used for performing the foregoing methods.

The foregoing content is merely used as an example for description. When the communication apparatus 600 is the terminal device 130, the access network device 120, or the mobility management network element 110, the communication apparatus 600 is responsible for performing methods or steps related to the terminal device 130, the access network device 120, or the mobility management network element 110 in the foregoing method embodiments. In addition, for implementation of operations in FIG. 6, refer to corresponding descriptions of the methods shown in the foregoing embodiments. Details are not described herein again.

FIG. 7 is a diagram of a communication apparatus 700 according to an embodiment of this application. The communication apparatus 700 may be configured to implement functions of an access network device 120, a terminal device 130, or a mobility management network element 110 in the foregoing methods. The communication apparatus 700 may be a chip in the access network device 120, the terminal device 130, or the mobility management network element 110. The communication apparatus 700 includes an input/output interface 720 and a processor 710. The input/output interface 720 may be an input/output circuit. The processor 710 may be a signal processor, a chip, or another integrated circuit that can implement the methods in this application. The input/output interface 720 is configured to input or output a signal or data.

For example, when the communication apparatus 700 is the terminal device 130, the input/output interface 720 is configured to: send request information 1, and receive response information 1. The processor 710 is configured to determine sending time of request information 2 based on a parameter 1.

For example, when the communication apparatus 700 is an access network device 120f, the input/output interface 720 is configured to send request information 1 and position information 1, and is further configured to receive response information 1. The processor 710 is configured to perform a part of or all steps of any method provided in this application.

For example, when the communication apparatus 700 is the mobility management network element 110, the input/output interface 720 is configured to receive request information 1 and position information 1, and is further configured to send response information 1. The processor 710 is configured to determine a parameter 1.

In a possible implementation, the processor 710 executes instructions stored in a memory, to implement a function implemented by the access network device 120, the terminal device 130, or the mobility management network element 110.

Optionally, the communication apparatus 700 further includes a memory.

Optionally, the processor is integrated with the memory.

Optionally, the memory is outside the communication apparatus 700.

In a possible implementation, the processor 710 may be a logic circuit, and the processor 710 inputs/outputs a message or signaling through the input/output interface 720. The logic circuit may be a signal processor, a chip, or another integrated circuit that can implement the methods in embodiments of this application.

The foregoing description of the apparatus in FIG. 7 is merely an example for description. The apparatus can be configured to perform the methods described in the foregoing embodiments. For specific content, refer to descriptions in the foregoing method embodiments.

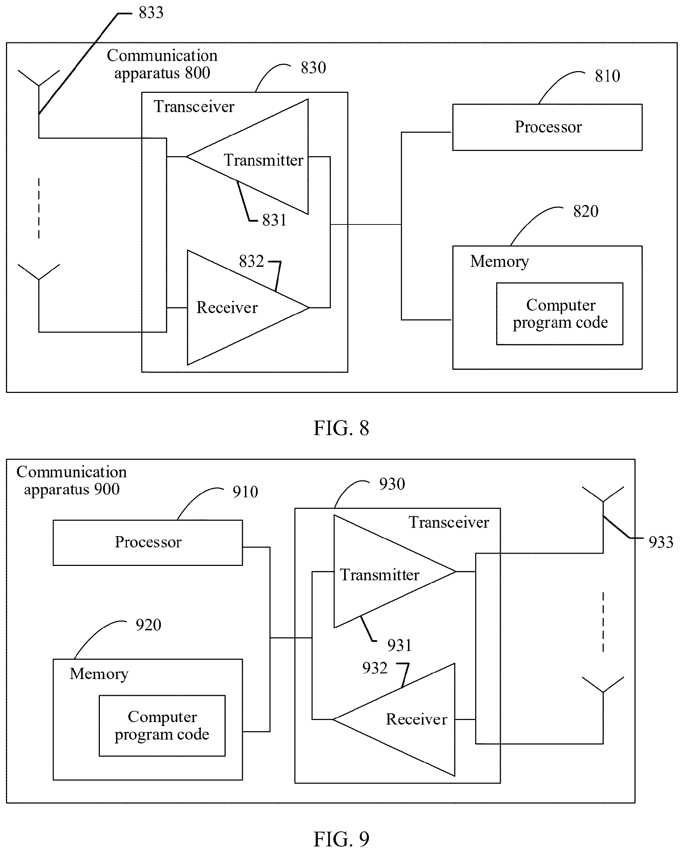

FIG. 8 is a block diagram of a communication apparatus 800 according to an embodiment of this application. The communication apparatus 800 may be an access network device 120, or may be a chip. The communication apparatus 800 may be configured to perform an operation performed by the access network device 120 in the foregoing method embodiments.

When the communication apparatus 800 is the access network device 120, for example, when the communication apparatus 800 is a base station, FIG. 8 is a simplified diagram of a structure of the base station. The base station includes a module 810, a module 820, and a module 830. The module 810 is mainly configured to: perform baseband processing, control the base station, and the like. The module 810 is usually a control center of the base station, may be usually referred to as a processor, and is configured to control the base station to perform a processing operation on a network device side in the foregoing method embodiments. The module 820 is mainly configured to store computer program code and data. The module 830 is mainly configured to receive and send a radio frequency signal and perform conversion between the radio frequency signal and a baseband signal. The module 830 may be usually referred to as a transceiver module, a transceiver machine, a transceiver circuit, a transceiver, or the like. A transceiver module of the module 830 may also be referred to as a transceiver machine, a transceiver, or the like, and includes an antenna 833 and a radio frequency circuit (not shown in FIG. 8), where the radio frequency circuit is mainly configured to perform radio frequency processing. Optionally, a component that is configured to implement a receiving function and that is in the module 830 may be considered as a receiver, and a component configured to implement a sending function may be considered as a transmitter. In other words, the module 830 includes a receiver 832 and a transmitter 831. The receiver may also be referred to as a receiving module, a receiver machine, a receiving circuit, or the like, and the transmitter may be referred to as a transmitting module, a transmitter machine, a transmitting circuit, or the like.

The module 810 and the module 820 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, one or more processors may alternatively be shared by the plurality of boards, or one or more memories may be shared by the plurality of boards, or one or more processors may be simultaneously shared by the plurality of boards.

For example, in an implementation, the transceiver module of the module 830 is configured to perform a receiving/sending-related process performed by the access network device 120 in the foregoing embodiments. A processor of the module 810 is configured to perform a processing-related process performed by the access network device 120 in the foregoing embodiments.

In another implementation, a processor of the module 810 is configured to perform a processing-related process performed by a communication device in the foregoing embodiments.

In another implementation, the transceiver module of the module 830 is configured to perform a receiving/sending-related process performed by a communication device in the foregoing embodiments.

It should be understood that, FIG. 8 is merely an example rather than a limitation, and the foregoing access network device 120 including the processor, the memory (optional), and the transceiver may not depend on structures shown in FIG. 5 to FIG. 7.

When the communication apparatus 800 is the chip, the chip includes a transceiver, a memory (optional), and a processor. The transceiver may be an input/output circuit or a communication interface. The processor is a processor, a microprocessor, or an integrated circuit integrated on the chip. A sending operation of the access network device 120 in the foregoing method embodiments may be understood as output of the chip, and a receiving operation of the access network device 120 in the foregoing method embodiments may be understood as input of the chip.

FIG. 9 is a block diagram of a communication apparatus 900 according to an embodiment of this application. The communication apparatus 900 may be a terminal device 130, or a processor or a chip of the terminal device 130. The communication apparatus 900 is configured to perform an operation performed by the terminal device 130 or a communication device in the foregoing method embodiments.

When the communication apparatus 900 is the terminal device 130, FIG. 9 is a simplified diagram of a structure of the terminal device. As shown in FIG. 9, the terminal device includes a processor, a memory (optional), and a transceiver. The memory may store computer program code, and the transceiver includes a transmitter 931, a receiver 932, a radio frequency circuit (not shown in FIG. 9), an antenna 933, and an input/output apparatus (not shown in FIG. 9).

The processor is mainly configured to process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. It should be noted that, some types of terminal devices may not have the input/output apparatus.

When the data needs to be sent, after performing baseband processing on to-be-sent data, the processor outputs the baseband signal to the radio frequency circuit; and the radio frequency circuit performs radio frequency processing on the baseband signal and then sends the radio frequency signal to the outside in the form of the electromagnetic wave through the antenna. When the data is sent to the terminal device, the radio frequency circuit receives the radio frequency signal through the antenna, converts the radio frequency signal into the baseband signal, and outputs the baseband signal to the processor. The processor converts the baseband signal into data, and processes the data. For ease of description, only one memory, one processor, and one transceiver are shown in FIG. 9. In an actual terminal device product, there may be one or more processors and one or more memories. The memory may also be referred to as a storage medium, a storage device, or the like. The memory may be arranged independent of the processor, or may be integrated with the processor. This is not limited in embodiments of this application.

In embodiments of this application, an antenna and a radio frequency circuit that have receiving and sending functions may be considered as a transceiver module (or a transceiver unit) of the terminal device, and a processor that has a processing function may be considered as a processing module (or a processing unit) of the terminal device.

As shown in FIG. 9, the terminal device includes a processor 914, a memory 920 (optional), and a transceiver 930. The processor 914 may also be referred to as a processing unit, a processing board, a processing module, a processing apparatus, or the like. The transceiver 930 may also be referred to as a transceiver unit (which may include a receiving unit and a sending unit), a transceiver machine, a transceiver apparatus, or the like.

Optionally, a component configured to implement a receiving function in the transceiver 930 may be considered as a receiving module, and a component configured to implement a sending function in the transceiver 930 may be considered as a sending module. In other words, the transceiver 930 includes a receiver and a transmitter. The transceiver may also sometimes be referred to as a transceiver machine, a transceiver module, a transceiver circuit, or the like. The receiver may also sometimes be referred to as a receiver machine, a receiving module, a receiving circuit, or the like. The transmitter may also sometimes be referred to as a transmitter machine, a transmitting module, a transmitting circuit, or the like.

For example, in an implementation, the processor 914 is configured to perform a processing action on a terminal device 130 side in embodiments shown in FIG. 1 to FIG. 4, and the transceiver 930 is configured to perform receiving and sending actions on the terminal device 130 side in FIG. 1 to FIG. 4.

For example, in an implementation, the processor 914 is configured to perform a processing action on a terminal device 130 side in embodiments shown in FIG. 1 to FIG. 4, and the transceiver 930 is configured to perform receiving and sending actions on the terminal device 130 side in FIG. 1 to FIG. 4.

It should be understood that, FIG. 9 is merely an example rather than a limitation, and the foregoing terminal device 130 including the transceiver module and the processing module may not depend on structures shown in FIG. 5 to FIG. 7.

When the communication apparatus 900 is the chip, the chip includes a processor, a memory, and a transceiver. The transceiver may be an input/output circuit or a communication interface. The processor may be a processing module, a microprocessor, or an integrated circuit integrated on the chip. A sending operation of the terminal device in the foregoing method embodiments may be understood as output of the chip, and a receiving operation of the terminal device in the foregoing method embodiments may be understood as input of the chip.

This application further provides a chip, including a processor. The processor is configured to invoke, from a memory, instructions stored in the memory and run the instructions, so that a communication device in which the chip is installed performs the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes a memory, and the memory is configured to store a computer program or code.

This application further provides a processor. The processor is configured to be coupled to a memory, and configured to perform a method and a function that are relates to a network device or a terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

A person of ordinary skill in the art may be aware that, in combination with examples described in embodiments disclosed in this specification, units and algorithm steps may be implemented by electronic hardware or a combination of computer software and electronic hardware. Whether such functions are performed by hardware or software depends on specific applications and design constraint conditions of the technical solutions. A person skilled in the art may use different methods to implement described functions for each specific application, but it should not be considered that such implementation goes beyond the scope of this application.

It may be clearly understood by a person skilled in the art that, for the purpose of convenient and brief description, for a specific working process of the foregoing system, apparatuses, and units, refer to a corresponding process in the foregoing method embodiments. Details are not described herein again.

In a plurality of embodiments provided in this application, the disclosed system, apparatuses, and methods may be implemented in other manners. For example, apparatus embodiments described above are merely examples. For example, division of units is merely logical function division, and there may be another division manner during actual implementation. For example, a plurality of units or components may be combined or integrated into another system, or some features may be ignored or not performed.

In addition, displayed or discussed mutual couplings or direct couplings or communication connections may be implemented through some interfaces. Indirect couplings or communication connections between apparatuses or units may be in electronic, mechanical, or other forms.

Units described as separate parts may or may not be physically separate, and parts displayed as units may or may not be physical units, to be specific, may be located at one position, or may be distributed on a plurality of network units. A part or all of the units may be selected based on an actual requirement to achieve the objectives of the solutions of embodiments.

Functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to a conventional technology, or a part of the technical solutions may be embodied in a form of a software product. The computer software product is stored in a storage medium, and includes a plurality of instructions for instructing a computer device (which may be a personal computer, a server, a network device, or the like) to perform all or a part of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
receiving first request information and first position information, wherein the first request information is used by a terminal device to request to perform a first service, and the first position information indicates a first position of the terminal device;
determining that the first position is in a first area, wherein the first area is an area in which performing of the first service is forbidden; and
sending first response information, wherein the first response information indicates that the first request information is rejected, the first response information comprises a first parameter, the first parameter is for determining sending time of second request information, and the second request information is used by the terminal device to request to perform the first service.

2. The method according to claim 1, wherein the first parameter comprises a first radius, and a distance between a second position that is of the terminal device and that corresponds to the second request information and the first position is greater than or equal to the first radius.

3. The method according to claim 1, wherein the first parameter comprises first duration, and a time interval between the sending time of the second request information and sending time of the first request information is greater than or equal to the first duration.

4. The method according to any one of claims 1 to 3, wherein
the first service is a registration service; or the first service is a session establishment request service.

5. The method according to claim 4, wherein
the first service is the registration service, and the first area is a forbidden area; or
the first service is the session establishment request service, and the first area is a service restriction area.

6. A communication method, comprising:
sending first request information, wherein the first request information is for requesting to perform a first service; and
receiving first response information, wherein the first response information indicates that the first request information is rejected, the first response information comprises a first parameter, the first parameter is for determining sending time of second request information, and the second request information is for requesting to perform the first service; and the first request information corresponds to a first position, the first position is in a first area, and the first area is an area in which performing of the first service is forbidden.

7. The method according to claim 6, wherein the first parameter comprises a first radius, and the method further comprises:
sending the second request information, wherein the second request information corresponds to a second position, and a distance between the second position and the first position is greater than or equal to the first radius.

8. The method according to claim 6, wherein the first parameter comprises first duration, and the method further comprises:
sending the second request information, wherein interval duration between the sending time of the second request information and sending time of the first request information is greater than or equal to the first duration.

9. The method according to any one of claims 6 to 8, wherein
the first service is a registration service; or the first service is a session establishment request service.

10. The method according to claim 9, wherein
the first service is the registration service, and the first area is a forbidden area; or
the first service is the session establishment request service, and the first area is a service restriction area.

11. The method according to any one of claims 6 to 10, wherein the method further comprises:
sending first position information, wherein the first position information indicates the first position.

12. A communication method, comprising:
sending, by an access network device, first request information and first position information to a mobility management network element, wherein the first request information is used by a terminal device to request to perform a first service, and the first position information indicates a first position of the terminal device;
determining, by the mobility management network element, that the first position is in a first area, wherein the first area is an area in which performing of the first service is forbidden; and
sending, by the mobility management network element, first response information to the access network device, wherein the first response information indicates that the first request information is rejected, the first response information comprises a first parameter, the first parameter is for determining sending time of second request information, and the second request information is used by the terminal device to request to perform the first service.

13. The method according to claim 12, wherein the first parameter comprises a first radius, and the method further comprises:
sending, by the access network device, the second request information and second position information to the mobility management network element, wherein the second position information indicates a second position of the terminal device, and a distance between the second position and the first position is greater than or equal to the first radius.

14. The method according to claim 12, wherein the first parameter comprises first duration, and the method further comprises:
sending, by the access network device, the second request information and second position information to the mobility management network element, wherein the second position information indicates a second position of the terminal device, and interval duration between the sending time of the second request information and sending time of the first request information is greater than or equal to the first duration.

15. The method according to any one of claims 12 to 14, wherein
the first service is a registration service; or the first service is a session establishment request service.

16. The method according to claim 15, wherein
the first service is the registration service, and the first area is a forbidden area; or
the first service is the session establishment request service, and the first area is a service restriction area.

17. A communication apparatus, comprising a processor, wherein the processor is configured to cause, by executing a computer program or instructions or by using a logic circuit,
the communication apparatus to perform the method according to any one of claims 1 to 5; or
the communication apparatus to perform the method according to any one of claims 6 to 11.

18. A communication apparatus, comprising a logic circuit and an input/output interface, wherein the input/output interface is configured to input and/or output a signal; and
the logic circuit is configured to perform the method according to any one of claims 1 to 5; or
the logic circuit is configured to perform the method according to any one of claims 6 to 11.

19. A computer-readable storage medium, wherein the computer-readable storage medium stores a computer program or instructions, and when the computer program or the instructions are run on a computer,
the method according to any one of claims 1 to 5 is performed; or
the method according to any one of claims 6 to 11 is performed.

20. A computer program product, comprising instructions, wherein when the instructions are run on a computer,
the method according to any one of claims 1 to 5 is performed; or
the method according to any one of claims 6 to 11 is performed.

21. A communication system, comprising an access network device and a mobility management network element, wherein
the access network device is configured to send first request information and first position information to the mobility management network element, wherein the first request information is used by a terminal device to request to perform a first service, and the first position information indicates a first position of the terminal device;
the mobility management network element is configured to: receive the first request information and the first position information, and determine that the first position is in a first area, wherein the first area is an area in which performing of the first service is forbidden; and send first response information to the access network device, wherein the first response information indicates that the first request information is rejected, the first response information comprises a first parameter, the first parameter is for determining sending time of second request information, and the second request information is used by the terminal device to request to perform the first service; and
the access network device is configured to receive the first response information from the mobility management network element.
